(19) Europäisches Patentamt
European Patent Office
Office européen des brevets

(11) Veröffentlichungsnummer: **0 170 168**
**B1**

(12) # EUROPÄISCHE PATENTSCHRIFT

(45) Veröffentlichungstag der Patentschrift: **20.04.88**

(51) Int. Cl.⁴: **C 07 C 161/00**, A 01 N 41/02

(21) Anmeldenummer: **85109025.8**

(22) Anmeldetag: **19.07.85**

(54) **N,N-Diethyl-N'-aryl-N'-(dichlorfluormethylthio)-sulfamid-Mikrobizide.**

(30) Priorität: **31.07.84 DE 3428163**

(43) Veröffentlichungstag der Anmeldung: **05.02.86 Patentblatt 86/6**

(45) Bekanntmachung des Hinweises auf die Patenterteilung: **20.04.88 Patentblatt 88/16**

(84) Benannte Vertragsstaaten: **BE CH DE FR GB IT LI NL SE**

(56) Entgegenhaltungen:
**DE - A - 1 957 484**

**CHEMICAL ABSTRACTS, Band 97, Nr. 5, 2. August 1982, Seiten 188-189, Zusammenfassung Nr. 34726j und Chemical Substances Index, Seite 3951CS, Columbus, Ohio, US**
**ANGEWANDTE CHEMIE, Band 76, Nr. 19, 7. Oktober 1964, Seiten 801-816, Weinheim, DE; E. KÜHLE et al.: "Fluordichlormethylthio-Verbindungen und ihre Verwendung im Pflanzenschutz"**

(73) Patentinhaber: **BAYER AG, Konzernverwaltung RP Patentabteilung, D-5090 Leverkusen 1 Bayerwerk (DE)**

(72) Erfinder: **Kühle, Engelbert, Dr., von Bodelschwinghstrasse 42, D-5060 Bergisch-Gladbach 2 (DE)**
Erfinder: **Paulus, Wilfried, Dr., Deswatinesstrasse 90, D-4150 Krefeld (DE)**
Erfinder: **Fischler, H. Michael, Dr., Buschstrasse 112, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft die Verwendung von N,N-Diethyl-N'-aryl-N'-(dichlorfluormethylthio)-sulfamiden als Mikrobizide zum Schutz technischer Materialien.

Aus der DE-AS 1 193 498 sind Dichlorfluormethylthio-Verbindungen und ihre Verwendung im Pflanzenschutz bekannt. N,N-Dimethyl-N'-phenyl-N'-(dichlorfluormethylthio)-sulfamid wird als Fungizid in Pflanzenschutzmitteln beschrieben.

Die Verwendung von N-(Trihalogenmethylthio)-Verbindungen zum Schutz technischer Materialien gegen mikrobiellen Abbau ist bekannt [US 2 553 770; Journ. Agr. Food Chem. 14, 365 (1966); Fette, Seifen, Anstrichmittel 68, 272 (1966)]. Durch ihre geringe Löslichkeit bedingt, ist ihre technische Anwendung jedoch unbefriedigend.

Die Wirkung von N,N-Dimethyl-N'-phenyl-N'-(dichlorfluormethylthio)-sulfamid als mikrobizider Wirkstoff in Anstrichen und Kunststoffüberzügen wird in der DE-AS 1 238 139 beschrieben. Ebenso ist die Wirkung dieses Stoffes gegen holzschädigende Pilze aus «Holz als Roh- und Werkstoff 35, (1977) 233-237» bekannt. Insbesondere zum Schutz technischer Materialien ist dieser Wirkstoff jedoch unzureichend. Er löst sich beispielsweise in den für Holzschutzmittel üblichen Formulierungsmitteln sehr schlecht, so dass grosse Formulierungsmittelmengen erforderlich sind, um die erforderliche Menge an Wirkstoff auf und/oder in das Holz zu bringen.

Es wurde nun gefunden, dass N,N-Diethyl-N'-aryl-N'-(dichlorfluormethylthio)-sulfamide der Formel

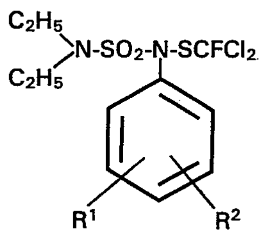

I

in der

$R^1$ und $R^2$ gleich oder verschieden sind und Wasserstoff, Niederalkyl oder Halogen bedeuten,

eine gegenüber den bekannten Mikrobiziden, z.B. dem N,N-Dimethyl-N'-phenyl-N'-(dichlorfluormethylthio)-sulfamid, wesentlich verbesserte mikrobizide Wirksamkeit und eine gute Löslichkeit in Anstrich- und Imprägnierungsmitteln aufweisen.

In Formel I bedeutet Niederalkyl im allgemeinen einen geradkettigen oder verzweigten Kohlenwasserstoffrest mit 1 bis etwa 6 Kohlenstoffatomen. Im einzelnen seien genannt: Methyl, Ethyl, Propyl, Isopropyl, Butyl, Isobutyl, Pentyl, Isopentyl, Hexyl und Isohexyl. Bevorzugte Niederalkylreste sind der Methyl- und der Ethylrest.

Halogen bedeutet erfindungsgemäss Fluor, Chlor, Brom und Jod, bevorzugt Chlor.

Bevorzugt werden N,N-Diethyl-N'-aryl-N'-(dichlorfluormethylthio)-sulfamide der Formel

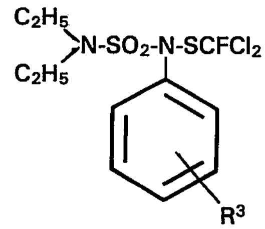

II

verwendet, in der

$R^3$ Wasserstoff, Methyl oder Ethyl bedeutet.

Als Beispiele für die erfindungsgemäss zu verwendenden N,N-Diethyl-N'-aryl-N'-(dichlorfluormethylthio)-sulfamide seien genannt: N,N-Diethyl-N'-phenyl-N'-(dichlorfluormethylthio)-sulfamid, N,N-Diethyl-N'-(p-tolyl)-N'-(dichlorfluormethylthio)-sulfamid, N,N-Diethyl-N'-(p-chlor-phenyl)-N'-(dichlorfluormethylthio)-sulfamid.

Die erfindungsgemäss zu verwendenden N,N-Diethyl-N'-aryl-N'-(dichlorfluormethylthio)-sulfamide sind nach bekannten Verfahren, z.B. durch Umsetzung von N,N-Diethyl-N'-arylsulfamiden mit Dichlorfluormethansulfenylchlorid in Gegenwart eines säurebindenden Mittels erhältlich.

Die N,N-Diethyl-N'-arylsulfamide können ihrerseits in an sich bekannter Weise aus N,N-Diethylsulfamidsäurechlorid und dem entsprechenden Anilin in Gegenwart eines säurebindenden Mittels hergestellt werden.

Technische Materialien sind erfindungsgemäss nicht lebende Materialien, die für die Verwendung in der Technik zubereitet worden sind. Beispielsweise können technische Materialien, die durch erfindungsgemässe Wirkstoffe vor mikrobieller Veränderung oder Zerstörung geschützt werden sollen, Klebstoffe, Leime, Papier und Karton, Textilien, Leder, Holz, Anstrichmittel und Kunststoffartikel, Kühlschmierstoffe und andere Materialien sein, die von Mikroorganismen befallen oder zersetzt werden können. Im Rahmen der zu schützenden Materialien seien auch Teile von Produktionsanlagen, beispielsweise Kühlwasserkreisläufe, genannt, die durch Vermehrung von Mikroorganismen beeinträchtigt werden können. Im Rahmen der vorliegenden Erfindung seien als technische Materialien vorzugsweise Klebstoffe, Leime, Papiere und Kartone, Leder, Holz, Anstrichmittel, Kühlschmiermittel und Kühlkreisläufe genannt. Im besonderen sei der Schutz von Vorrichtungen und/oder Gerätschaften aus Holz genannt.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemässen Wirkstoffe gegen Pilze, insbesondere Schimmelpilze, holzverfärbende und holzzerstörende Pilze (Basidiomyceten), sowie gegen Schleimorganismen und Algen.

Es seien beispielsweise Mikroorganismen der folgenden Gattungen genannt:

Alternaria, wie Alternaria tenuis,
Aspergillus, wie Aspergillus niger,
Chaetomium, wie Chaetomium globosum,
Coniophora, wie Coniophora puteana,
Lentinus, wie Lentinus tigrinus,
Penicillium, wie Penicillium glaucum,

Coriolus, wie Coriolus versicolor,
Aureobasidium, wie Aureobasidium pullulans,
Sclerophoma, wie Sclerophoma pityophila,
Trichoderma, wie Trichoderma viride,
Escherichia, wie Escherichia coli,
Pseudomonas, wie Pseudomonas aeruginosa,
Staphylococcus, wie Staphylococcus aureus.

Je nach Anwendungsgebiet kann ein erfindungsgemässer Wirkstoff in die üblichen Formulierungen überführt werden, wie Lösungen, Emulsionen, Suspensionen, Pulver, Pasten und Granulate.

Diese können in an sich bekannter Weise hergestellt werden, z.B. durch Vermischen der Wirkstoffe mit einem Streckmittel, das aus flüssigem Lösungsmittel und/oder festen Trägerstoffen besteht, gegebenenfalls unter Verwendung von oberflächenaktiven Mitteln, wie Emulgatoren und/oder Dispergiermitteln, wobei gegebenenfalls im Falle der Benutzung von Wasser als Streckmittel organische Lösungsmittel wie Alkohole als Hilfsmittel verwendet werden können.

Flüssige Lösungsmittel für die Wirkstoffe können beispielsweise Wasser, Alkohole, wie niedere aliphatische Alkohole, vorzugsweise Ethanol oder Isopropanol, oder Benzylalkohol, Ketone, wie Aceton oder Methylethylketon, flüssige Kohlenwasserstoffe, wie Benzinfraktionen, halogenierte Kohlenwasserstoffe, wie 1,2-Dichlorethan, sein.

Mikrobizide Mittel enthalten die Wirkstoffe im allgemeinen in einer Menge von 1 bis 95%, bevorzugt von 10 bis 75%.

Die Anwendungskonzentrationen der erfindungsgemäss zu verwendenden Sulfamide richtet sich nach der Art und dem Vorkommen der zu bekämpfenden Mikroorganismen, sowie nach der Zusammensetzung des zu schützenden Materials. Die optimale Einsatzmenge kann durch Testreihen ermittelt werden. Im allgemeinen liegen die Anwendungskonzentrationen im Bereich von 0,001 bis 5 Gew.-%, vorzugsweise von 0,05 bis 1,0 Gew.-%, bezogen auf das zu schützende Material.

Die erfindungsgemäss zu verwendenden Sulfamide können auch in Mischung mit anderen bekannten Wirkstoffen vorliegen. Beispielsweise seien die folgenden Wirkstoffe genannt: Benzylalkoholmono-(poly)hemiformal und andere Formaldehyd abspaltende Verbindungen, Benzimidazolyl-methylcarbamate, Tetramethylthiuramdisulfid, Zinksalze von Dialkyldithiocarbamaten, 2,4,5,6-Tetrachlorisophthalonitril, Thiazolylbenzimidazol, Mercaptobenzthiazol, Organo-Zinnverbindungen, Methylenbisthiocyanat, Phenolderivate, wie 2-Phenylphenol, (2,2'-Dihydroxy-5,5'-dichlor)diphenylmethan und 3-methyl-4-chlor-phenol.

*Herstellungsbeispiele*

*Beispiel 1*

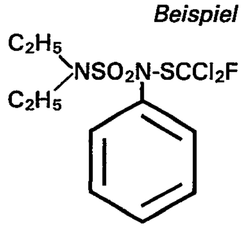

45,6 g (0,2 Mol) N,N-Diethyl-N'-phenyl-sulfamid und 33,8 g (0,2 Mol) Dichlorfluormethansulfenylchlorid werden in 200 ml Toluol gelöst und unter Wasserkühlung bei Raumtemperatur mit 22 g (0,22 Mol) Triethylamin versetzt. Hierbei steigt die Temperatur bis ca. 35°C an. Man schüttelt die Toluollösung mit Wasser aus, trocknet und verdampft das Lösungsmittel im Vakuum. Das zurückbleibende Öl (63 g) wird in Methanol gelöst. Auf Zusatz von wenig Wasser tritt Kristallisation ein. Schmp.: 60 bis 61°C, Ausbeute 37 g = 51% der Theorie.

*Herstellung des Vorproduktes*

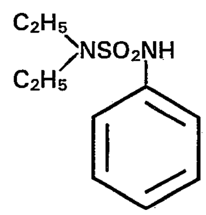

55,7 g (0,6 Mol) Anilin werden in 200 ml Wasser suspendiert. Unter Rühren tropft man bei 40 bis 50°C 51,2 g (0,3 Mol) N,N-Diethyl-sulfamidsäurechlorid zu, rührt etwa 1/2 Stunde lang bei dieser Temperatur, nimmt das ölige Reaktionsprodukt in Diethylether auf und wäscht mit wässriger Salzsäure. Nach dem Trocknen und Verdampfen des Lösungsmittels bleiben 40 g eines Öls zurück. Destillation Sdp.$_{10}$: 200 bis 205°C, Ausbeute 33 g = 48% der Theorie.

*Beispiel 2*

In analoger Weise wie in Beispiel 1 erhält man die Verbindung

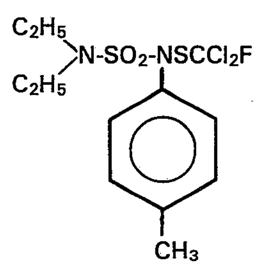

Schmp.: 59 bis 60°C.

*Anwendungsbeispiele*

*Beispiel 3*

Zum Nachweis der Wirksamkeit gegen Pilze werden die Minimalen Hemm-Konzentrationen (MHK) von erfindungsgemässen Wirkstoffen bestimmt:

Ein Agar, der aus Bierwürze und Pepton hergestellt wird, wird mit erfindungsgemässen Wirkstoffen in Konzentrationen von 0,1 mg/l bis 5000 mg/l versetzt. Nach Erstarren des Agars erfolgt Kontamination mit Reinkulturen der in der Tabelle aufgeführten Testorganismen. Nach 2wöchiger Lagerung bei 28°C und 60 bis 70% relativer Luftfeuchtigkeit wird die MHK bestimmt. MHK ist die niedrigste Konzentration an Wirkstoff, bei der keinerlei Bewuchs durch die verwendete Mikrobenart erfolgt; sie ist in der nachstehenden Tabelle angegeben.

Tabelle 1

Angabe der MHK-Werte in mg/l bei der Einwirkung erfindungsgemässer Substanzen auf Pilze

$(C_2H_5)_2N\text{-}SO_2\text{-}N\text{-}S\text{-}CCl_2F$

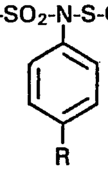

Testorganismen

| | R=H (nach Beispiel 1) | R=$CH_3$ (nach Beispiel 2) |
|---|---|---|
| Alternaria tenuis | 10 | 10 |
| Aspergillus niger | 10 | 20 |
| Aureobasidium pullulans | 5 | 7,5 |
| Chaetomium globosum | 7,5 | 5 |
| Coniophora puteana | 0,1 | 0,2 |
| Penicillium glaucum | 15 | |

*Beispiel 4* (Wirkung gegen Schleimorganismen)

Die erfindungsgemässen Wirkstoffe nach den Beispielen 1 und 2 werden in Konzentrationen von jeweils 0,1 bis 100 mg/l in Alle's Nährlösung ([Arch. Mikrobiol. 17, 34 bis 53 (1952)], die in 4 Liter sterilem Wasser, 0,2 g Ammoniumchlorid, 4,0 g Natriumnitrat, 1,0 g Dikaliumhydrogenphosphat, 0,2 g Calciumchlorid, 2,05 g Magnesiumsulfat, 0,02 g Eisenchlorid und 1% Caprolactam enthält, in wenig Aceton gelöst, zur Anwendung gebracht. Kurz vorher wird die Nährlösung mit Schleimorganismen (ca. $10^6$ Keime/ml), die aus bei der Polyamid-Herstellung verwendeten Spinnwasser-Kreisläufen isoliert wurden, infiziert. Nährlösungen, die die minimale Hemmkonzentration (MHK) oder grössere Wirkstoffkonzentrationen aufweisen, sind nach 3wöchiger Kultur bei Raumtemperatur noch völlig klar, d.h. die in wirkstofffreien Nährlösungen nach 3 bis 4 Tagen bemerkbare starke Vermehrung der Mikroben und Schleimbildung unterbleibt.

Für die Wirkstoffe nach den Beispielen 1 und 2 werden auf diese Weise MHK's von 2 bis 5 mg/l ermittelt.

*Beispiel 5*

Bestimmung der toxischen Grenzwerte (kg/$m^3$ Holz) der Wirkstoffe gemäss Beispiel 1 und 2 für Coniophora puteana bzw. Coriolus versicolor auf Kiefern- bzw. Buchenholz.

Die Bestimmung der toxischen Grenzwerte erfolgt in Anlehnung an die von H.P. Sutter, Int. Biodeterioration Bulletin 14 (3), 1978, Seiten 95 bis 99, beschriebenen Methode.

Für die Tests werden jeweils frisch geschnittene dünne Stirnholzscheibchen (Grösse 40 × 40 mm, Dicke etwa 2 mm) im Vakuum mit Lösungen unterschiedlich definierter Wirkstoffkonzentration getränkt. Die Menge des absorbierten Wirkstoffs in kg/$m^3$ Holz wird aus der Retention der Lösung (durch Einzelwägung der Holzproben vor und nach der Imprägnierung bestimmt), der Holzdichte und der Konzentration des Wirkstoffs in der verwendeten Imprägnierlösung errechnet.

Je 5 der 15 getrockneten Prüflinge einer Wirkstoffkonzentration werden dem Pilzangriff ohne Belastung ausgesetzt, 5 weitere Proben werden vorher im Windkanal (Windgeschwindigkeit: 1 ± 0,1 m/sec; Temp.: 40 ± 2°C) 4 Wochen lang belastet, 5 andere Prüflinge werden einer Wässerung in Anlehnung an DIN EN 84 unterzogen (14 Tage Lagerung in dest. Wasser bei 20°C, 9maliger Wasserwechsel).

Für den mykologischen Test werden die Prüflinge nach Sterilisieren mit Propylenoxid einzeln auf das voll entwickelte Pilzmycel des Prüfpilzes auf Malzextraktagar in Petrischalen aufgelegt, durch Distanzhalter beträgt der Abstand zwischen Agaroberfläche und Probe ca. 5 mm. Nach 6wöchiger Lagerung bei 21-23°C wird der Zerstörungsgrad der Prüfling visuell beurteilt.

Als Grenzwerte der toxischen Wirkung werden die beiden Konzentrationen des Wirkstoffs in kg/$m^3$ Holz ermittelt, bei denen das Holz gerade noch und nicht mehr angegriffen wird.

In der folgenden Tabelle sind die Mittelwerte der Toxizitätsgrenzwerte für die erfindungsgemässen Substanzen gemäss Beispiel 1 und 2 sowie für den bekannten Wirkstoff Dichlofluanid für zwei Prüfpilze und zwei verschiedene Holzarten angegeben.

Mittlere Toxizitätsgrenzen (kg/$m^3$ Holz) von Wirkstoffen gemäss Beispiel 1 und 2 für holzzerstörende Pilze.

$(R_1)_2N\text{-}SO_2\text{-}N\text{-}S\text{-}CCl_2F$

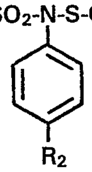

| | | Coniophora puteana (Kiefer) | | | Coriolus versicolor (Buche) | | |
|---|---|---|---|---|---|---|---|
| | | ohne Belastung | nach Wässerung | nach Belüftung | ohne Belastung | nach Wässerung | nach Belüftung |
| $R_1$ | $R_2$ | | | | | | |
| $C_2H_5$ | H | 0,4 | 0,8 | 2,0 | 0,6 | 1,1 | 2,7 |
| $C_2H_5$ | $CH_3$ | 0,7 | | | 1,5 | | |
| $CH_3$ | H * | 1,9 | 2,4 | 3,7 | 2,5 | 3,2 | 3,5 |

* = Dichlofluanid

*Beispiel 6*

Löslichkeiten erfindungsgemässer Wirkstoffe nach Beispiel 1 und 2 im Vergleich zum handelsüblichen Dichlofluanid in organischen Lösungsmitteln für Holzschutzmittel

| Wirkstoff | Löslichkeit (%) in Testbenzin | Shellsol AB |
|---|---|---|
| $(C_2H_5)_2N\text{-}SO_2\text{-}N\text{-}S\text{-}CCl_2F$ 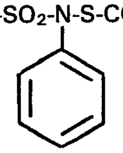 | 16 | 71 |
| $(C_2H_5)_2N\text{-}SO_2\text{-}N\text{-}S\text{-}CCl_2F$ 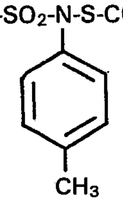 | 59 | 67 |
| $(CH_3)_2N\text{-}SO_2\text{-}N\text{-}S\text{-}CCl_2F$ 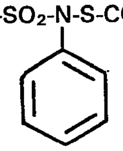 (Dichlofluanid) | 1,2 | 6 |

(Testbenzin und Shellsol AB sind handelsübliche niedrigsiedende Kohlenwasserstoffe).

**Patentansprüche**

1. Verwendung von N,N-Diethyl-N'-aryl-N'-(dichlorfluormethylthio)-sulfamiden der Formel

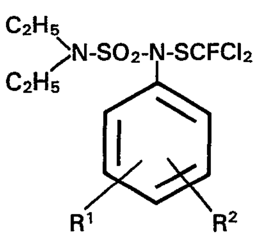

in der
$R^1$ und $R^2$ gleich oder verschieden sind und Wasserstoff, Niederalkyl oder Halogen bedeuten,

als Mikrobizide zum Schutz technischer Materialien vor Veränderung oder Zerstörung durch Mikroben.

2. Verwendung gemäss Anspruch 1, dadurch gekennzeichnet, dass die N,N-Diethyl-N'-aryl-N'-(dichlorfluormethylthio)-sulfamide der Formel

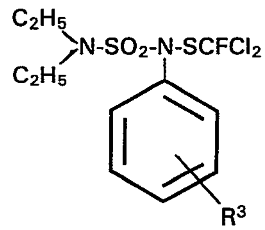

entsprechen, in der
$R^3$ Wasserstoff, Methyl oder Ethyl bedeutet.

3. Verwendung gemäss Ansprüchen 1 oder 2 zum Schutz vor Schimmelpilzen, holzverfärbenden und holzzerstörenden Pilzen, Schleimorganismen und Algen.

**Claims**

1. Use of N,N-diethyl-N'-aryl-N'-(dichlorofluoromethylthio)-sulphamides of the formula

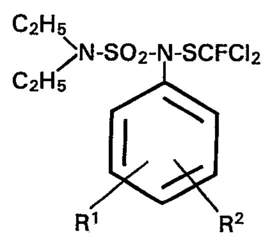

in which
$R^1$ and $R^2$ are identical or different and denote hydrogen, lower alkyl or halogen,

as microbicidal agents for protecting industrial materials against change or destruction by microbes.

2. Use according to claim 1, characterized in that the N,N-diethyl-N'-aryl-N'-(dichlorfluormethylthio)-sulphamides are of the formula

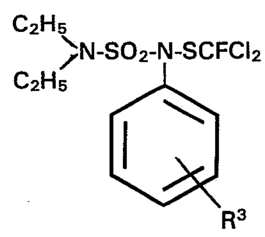

in which
$R^3$ denotes hydrogen, methyl or ethyl.

3. Use according to claim 1 or 2 for protecting against mould fungi, fungi which discolour and destroy timber, slime organisms and algae.

**Revendications**

1. Utilisation de N,N-diéthyl-N'-aryl-N'-(dichlorofluorométhylthio)-sulfonamides de formule

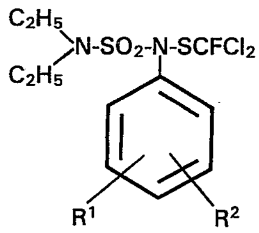

dans laquelle

$R^1$ et $R^2$, ayant des significations identiques ou différentes, représentent chacun l'hydrogène, un groupe alkyle inférieur ou un halogène

en tant que microbicides pour la protection des matières techniques contre les altérations ou les dégradations provoquées par les microbes.

2. Utilisation selon la revendication 1, caractérisée en ce que les N,N-diéthyl-N'-aryl-N'-(dichlorofluorométhylthio)-sulfonamides répondent à la formule

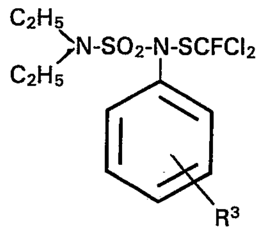

dans laquelle

$R^3$ représente l'hydrogène, un groupe méthyle ou éthyle.

3. Utilisation selon la revendication 1 ou 2, pour la protection contre les moisissures, les mycètes colorant le bois et dégradant le bois, les micro-organismes des mucilages et les algues.